# EUROPÄISCHE PATENTSCHRIFT

(11) **EP 4 154 717 B1**
(45) Veröffentlichungstag und Bekanntmachung des Hinweises auf die Patenterteilung: **24.07.2024**
(21) Anmeldenummer: 22194755.9
(22) Anmeldetag: 09.09.2022
(51) Int. Cl.: A21C 3/08

(54) **VORRICHTUNG ZUM VERDREHEN VON TEIGSTÜCKEN**
DEVICE FOR TWISTING DOUGH PIECES
DISPOSITIF POUR TOURNER DES MORCEAUX DE PÂTE

(30) Priorität: 23.09.2021 DE 102021124622
(43) Veröffentlichungstag der Anmeldung: 29.03.2023
(73) Patentinhaber: Fritsch Bakery Technologies GmbH & Co. KG, 97348 Markt Einersheim (DE)
(72) Erfinder: GIER, Michael, 97318 Kitzingen (DE)
(74) Vertreter: Grünecker Patent- und Rechtsanwälte PartG mbB

(56) Entgegenhaltungen:
- DE-C1- 3 903 122
- JP-A- H11 346 642
- JP-B2- 5 534 782
- US-A- 3 038 418

## Beschreibung

Die Erfindung bezieht sich auf eine Vorrichtung zum Verdrehen von Teigstücken.

Es sind verschiedene Arten von Teigprodukten bekannt, die bei ihrer Herstellung um eine Längsachse verdreht und/oder verdrillt werden. In Handarbeit werden solche Teigprodukte zu diesem Zweck an gegenüberliegenden Endabschnitten ergriffen und diese Endabschnitte manuell um eine zwischen den Endabschnitten orientierte Achse in entgegengesetzte Richtungen rotiert. Während diese Herstellungsweise für einfache Verdrehungen noch relativ einfach auch für Ungeübte zu bewerkstelligen ist, erfordern mehrfache Verdrehungen ein deutlich höheres Maß an Geschicklichkeit und Übung.

Zu diesem Zweck offenbart die EP 2 253 215 A1 eine Vorrichtung zum mehrfachen Verdrehen von Teigstreifen. Dazu werden Teigstreifen auf einem Förderband angeliefert, wobei zwei gegenüberliegende Enden über die Ränder des Förderbands hinausragen. Die beiden Enden werden dann von zwei Greifern ergriffen. Durch Rotieren der Greifer wird der Teigstreifen verdreht. Die Greifer werden außerdem von dem anliefernden Förderband zu einem abfördernden Förderband bewegt, auf das die verdrehten Teigstreifen abgelegt werden. Dieses System erfordert einen hohen konstruktiven und regelungstechnischen Aufwand, ist schwierig zu reinigen und verursacht daher hohe Entwicklungs- Herstellungs- und Betriebskosten.

Aus der GB 183 848 A ist eine Vorrichtung zum Wickeln von flachen Teigportionen bekannt, bei der Haken zum Einleiten des Wickelprozesses vorgesehen sind, indem sie eine Vorderkante der Teigportion nach oben umklappen. Aus der nachveröffentlichten Anmeldung DE 10 2020 210 735.1 ist eine Vorrichtung bekannt, die zum Wickeln von, in diesem Fall gefüllten, Teigprodukten konfiguriert ist. Dort ist ein Halteband vorgesehen, das zum Eingreifen mit dem Füllgut konfiguriert ist, um sicherzustellen, dass das Füllgut wie gewünscht in den Teig eingewickelt wird.

In der US 3 038 418 A wird eine Teigverdrehmaschine offenbart. Diese umfasst ein Halteband und mehrere Verdrehbänder die jeweils parallel zu einer beweglichen Ablageoberfläche angeordnet sind. Das Halteband bewegt den Teig gleichschnell wie die Ablageoberfläche. Mindestens eines der Verdrehbänder bewegt sich schneller als die Alblageoberfläche, sodass der Teig verdreht wird.

Es ist eine Aufgabe der Erfindung, eine verbesserte Vorrichtung zum Verdrehen, insbesondere zum einfachen Verdrehen, von Teigstücken anzugeben, die einfacher konstruiert und somit kostengünstiger zu entwickeln, herzustellen und zu betreiben ist.

Diese Aufgabe wird gelöst durch eine Vorrichtung zum Verdrehen von Teigstücken mit den Merkmalen des Anspruchs 1.

Es wird eine Vorrichtung zum Verdrehen von Teigstücken offenbart. Sie umfasst eine Fördervorrichtung, die zum Fördern von Teigstücken in einer Produktionsrichtung konfiguriert ist, und wenigstens ein Halteband, das oberhalb der Fördervorrichtung angeordnet ist und zum Eingreifen mit einem ersten Abschnitt eines der auf der Fördervorrichtung angeordneten Teigstücke konfiguriert ist. Die Vorrichtung umfasst des Weiteren eine Drehvorrichtung, die dazu eingerichtet ist, einen Drehabschnitt des Teigstücks relativ zu dem ersten Abschnitt und nach oben zu drehen, während das Halteband mit dem ersten Abschnitt des Teigstücks eingreift. Als eine Bewegung nach oben kann dabei eine Bewegung angesehen werden, die von der Fördervorrichtung fort gerichtet ist.

Durch das Drehen des Drehabschnitts nach oben, während das Halteband im Eingriff mit dem ersten Abschnitt ist, können der Drehabschnitt und der erste Abschnitt relativ zueinander verdreht werden. Die Konstruktion dieser Vorrichtung ist deutlich einfacher als Ausführungen des Stands der Technik mit rotierenden Greifern, die zusätzlich noch das verdrehte Teigprodukt von einem Förderband zum anderen transportieren müssen. Außerdem ermöglicht der gleichzeitige Eingriff des Haltebands mit dem ersten Abschnitt des Teigstücks und der Drehvorrichtung mit dem Drehabschnitt ein Verdrehen der Abschnitte miteinander, wogegen Ausführungen aus dem Stand der Technik, die Haken aufweisen, nur ein Wickeln erlauben.

Es ist denkbar, dass die Fördervorrichtung und die Drehvorrichtung in einer Querrichtung, die quer, vorzugsweise senkrecht, zu der Produktionsrichtung orientiert ist, nebeneinander angeordnet sind. Dadurch kann es ermöglicht werden, dass das Teigstück um eine Achse verdreht wird, die quer, vorzugsweise senkrecht, zu der Produktionsrichtung verläuft. Dies kann vorteilhaft sein, da die Bewegung der Fördervorrichtung dazu genutzt werden kann, das Drehen des Drehabschnitts zu unterstützen.

Die Drehvorrichtung umfasst wenigstens einen Haken, der schwenkbar über der Fördervorrichtung angeordnet ist. Ein Haken ist dazu konfiguriert, zunächst mit dem Teigstück, insbesondere mit dem Drehabschnitt, einzugreifen. Durch Schwenken des Hakens kann das Teigstück, insbesondere der Drehabschnitt, relativ zu dem ersten Abschnitt und nach oben gedreht werden. Durch weiteres Schwenken des Hakens kann der Eingriff mit dem Teigstück, insbesondere mit dem Drehabschnitt, automatisch lösbar sein. Ein schwenkbar über der Fördervorrichtung angeordneter Haken kann also ein besonders einfaches Beispiel für eine Drehvorrichtung sein, die ohne steuerungsaufwand betreibbar sein kann.

Der Haken weist einen Eingreifabschnitt auf, der zum Eingreifen mit einem auf der Fördervorrichtung geförderten Teigstück konfiguriert ist. Dies kann bedeuten, dass der Eingreifabschnitt in einer Ruheposition und/oder Ausgangsposition des Hakens auf der Fördervorrichtung aufliegen kann oder der Abstand des Eingreifabschnitts zu einer Oberfläche der Fördervorrichtung kleiner sein kann als eine Dicke des Teigstücks. Die Dicke des Teigstücks kann dabei in einer Richtung senkrecht zu der Oberfläche der Fördervorrichtung definiert sein.

Es ist vorstellbar, dass der Haken durch den Eingriff des Eingreifabschnitts mit dem Teigstück und dessen Förderung durch die Fördervorrichtung von einer Ausgangsposition hin zu einer ausgelenkten Position schwenkbar ist. Dies kann den Vorteil aufweisen, dass kein zusätzlicher bzw. separater Antrieb für die Bewegung des Hakens vorgesehen werden muss. Vorzugsweise kann der Eingreifabschnitt in der ausgelenkten Position des Hakens stromaufwärts eines stromabwärtsseitigen Endabschnitts des Haltebands angeordnet sein. Als stromabwärtsseitiger Endabschnitt des Haltebands kann ein Abschnitt angesehen werden, an dem das Teigstück, insbesondere der erste Abschnitt des Teigstücks, außer Eingriff mit dem Halteband gebracht wird. Eine derartige Konfiguration kann den Vorteil aufweisen, dass der Drehabschnitt möglichst weit, vorzugsweise um mehr als 90 Grad, besonders bevorzugt um mehr als 180 Grad, relativ zu dem ersten Abschnitt gedreht wird, während der erste Abschnitt noch im Eingriff mit dem Halteband ist. Dadurch kann eine zuverlässigere Verdrehung der beiden Abschnitte relativ zueinander erreicht werden.

Vorteilhafterweise ist eine Schwenkachse, um welche der Haken schwenkbar ist, quer, vorzugsweise senkrecht, zu der Produktionsrichtung orientiert. Auf diese Weise kann die weiter oben beschriebene Antriebswirkung der Fördervorrichtung besonders effektiv ausgenutzt werden. Die Schwenkachse kann stromaufwärts eines stromabwärtsseitigen Endabschnitts des Haltebands angeordnet sein.

Es ist denkbar, dass eine Fördergeschwindigkeit der Fördervorrichtung und eine Fördergeschwindigkeit des Haltebandes unterschiedlich sind. Dadurch kann die Verdrehung des ersten Abschnitts und des Drehabschnitts relativ zueinander unterstützt werden, insbesondere indem der erste Abschnitt in eine geeignete Richtung gedreht wird. Besonders günstig ist es, wenn eine Fördergeschwindigkeit der Fördervorrichtung geringer ist als eine Fördergeschwindigkeit des Haltebandes.

Stromabwärts des Haltebandes, insbesondere stromabwärts eines stromabwärtsseitigen Endabschnitts des Haltebands, kann eine Andrückvorrichtung angeordnet sein. Die Andrückvorrichtung kann insbesondere oberhalb der Fördervorrichtung angeordnet sein. Zusätzlich oder alternativ kann die Andrückvorrichtung dazu konfiguriert sein, verdrehte Teigprodukte, die wie oben beschrieben durch verdrehen von Teigstücken erzeugt wurden, an die Fördervorrichtung anzudrücken. Dies kann den Vorteil aufweisen, dass die verdrehten Teigprodukte nicht, bspw. durch elastische Rückstellkräfte, nicht wieder in einen unverdrehten Zustand des Teigstücks zurücckehren. Bei der Andrückvorrichtung kann es sich z. B. um ein Förderband oder einen oder mehrere Förderriemen handeln, das bzw. die oberhalb der Fördervorrichtung angeordnet sein kann bzw. können.

Die Anmeldung bezieht sich auch auf ein Verfahren zum Verdrehen von Teigstücken. Das Verfahren umfasst Fördern von Teigstücken in einer Produktionsrichtung durch eine Fördervorrichtung, Eingreifen mit einem ersten Abschnitt eines der auf der Fördervorrichtung angeordneten Teigstücke durch wenigstens ein Halteband, das oberhalb der Fördervorrichtung angeordnet ist, und Drehen eines Drehabschnitts des Teigstücks relativ zu dem ersten Abschnitt und nach oben, während das Halteband mit dem ersten Abschnitt des Teigstücks eingreift, durch eine Drehvorrichtung. Als eine Bewegung nach oben kann dabei eine Bewegung angesehen werden, die von der Fördervorrichtung fort gerichtet ist.

Durch das Drehen des Drehabschnitts nach oben, während das Halteband im Eingriff mit dem ersten Abschnitt ist, können der Drehabschnitt und der erste Abschnitt relativ zueinander verdreht werden. Das Verfahren ermöglicht eine deutlich einfachere Konstruktion der ausführenden Vorrichtung als Ausführungen des Stands der Technik mit rotierenden Greifern, die zusätzlich noch das verdrehte Teigprodukt von einem Förderband zum anderen transportieren müssen. Außerdem ermöglicht der gleichzeitige Eingriff des Haltebands mit dem ersten Abschnitt des Teigstücks und der Drehvorrichtung mit dem Drehabschnitt ein Verdrehen der Abschnitte miteinander, wogegen Ausführungen aus dem Stand der Technik, die Haken aufweisen, nur ein Wickeln erlauben.

Es ist denkbar, dass der erste Abschnitt und der Drehabschnitt relativ zueinander um 180° verdreht werden. Für solche einfachen Verdrehungen kann das Verfahren besonders vorteilhaft sein, da es bei diesen Anwendungsfällen, zusätzlich zu der gegenüber dem Stand der Technik einfacheren Konstruktion der ausführenden Vorrichtung, auch noch eine vergleichbar schnelle Verdrehung gewährleisten kann.

Der erste Abschnitt und der Drehabschnitt können in einer Querrichtung, die quer, vorzugsweise senkrecht, zu der Produktionsrichtung orientiert ist, nebeneinander angeordnet sein. Dadurch kann es ermöglicht werden, dass das Teigstück um eine Achse verdreht wird, die quer, vorzugsweise senkrecht, zu der Produktionsrichtung verläuft. Dies kann vorteilhaft sein, da die Bewegung der Fördervorrichtung dazu genutzt werden kann, das Drehen des Drehabschnitts zu unterstützen.

Es kann vorteilhaft sein, wenn die Fördervorrichtung und das Halteband mit unterschiedlichen Fördergeschwindigkeiten angetrieben werden. Dadurch kann die Verdrehung des ersten Abschnitts und des Drehabschnitts relativ zueinander unterstützt werden, insbesondere indem der erste Abschnitt in eine geeignete Richtung gedreht wird. Besonders günstig ist es, wenn die Fördervorrichtung mit einer Fördergeschwindigkeit angetrieben wird, die geringer ist als eine Fördergeschwindigkeit des Haltebands.

Die Erfindung bezieht sich auf eine Vorrichtung sowie auf ein Verfahren der vorstehend beschriebenen Art. Im Folgenden wird eine vorteilhafte Ausführung anhand von Zeichnungen beispielhaft erläutert.
Figur 1 zeigt eine schematische Draufsicht einer Vorrichtung zum Verdrehen von Teigstücken.
Figuren 2 bis 5 zeigen schematische Seitenansichten der Vorrichtung aus Figur 1, wobei ein Haken in unterschiedlichen Schwenkpositionen dargestellt ist.

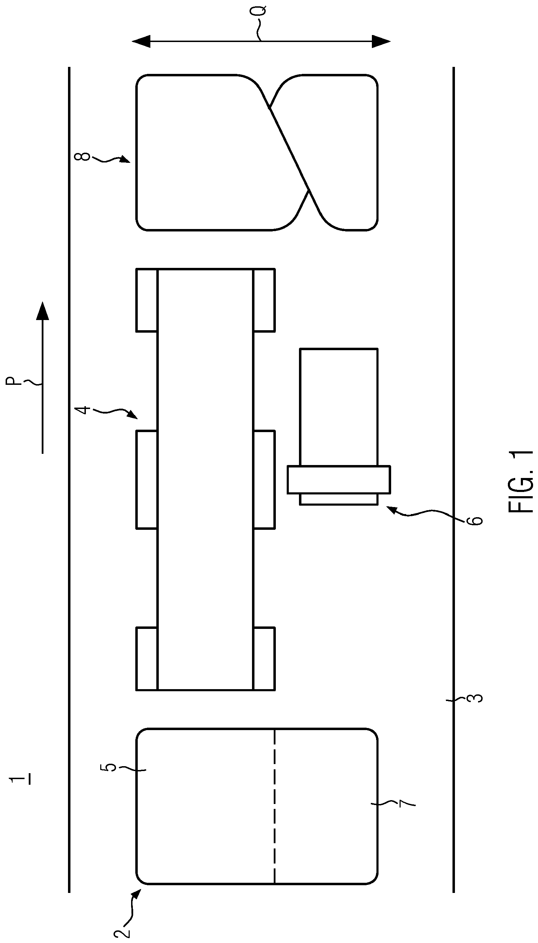

In Figur 1 ist eine Vorrichtung 1 zum Verdrehen von Teigstücken 2 in einer schematischen Draufsicht von oben dargestellt. Die Vorrichtung 1 kann eine Fördervorrichtung 3 umfassen. Die Fördervorrichtung 3 kann zum Fördern von Teigstücken in einer Produktionsrichtung P konfiguriert sein. Wie im vorliegenden Ausführungsbeispiel, kann die die Fördervorrichtung 3 ein Förderband umfassen. Die Vorrichtung 1 kann des Weiteren ein Halteband 4 umfassen. Das Halteband 4 kann oberhalb der Fördervorrichtung 3 angeordnet sein. Wie im vorliegenden Ausführungsbeispiel, kann das Halteband 4 zum Eingreifen mit einem ersten Abschnitt 5 eines auf der Fördervorrichtung 3 angeordneten Teigstücks 2 konfiguriert sein. Die Vorrichtung 1 kann des Weiteren eine Drehvorrichtung 6 umfassen. Die Drehvorrichtung 6 kann dazu eingerichtet sein, einen Drehabschnitt 7 des Teigstücks 2 relativ zu dem ersten Abschnitt 5 und nach oben zu drehen, während das Halteband 4 mit dem ersten Abschnitt 5 des Teigstücks 2 eingreift.

Der erste Abschnitt 5 des Teigstücks 2 und der Drehabschnitt 7 des Teigstücks 2 können in einer Querrichtung Q nebeneinander angeordnet sein. Die Querrichtung Q kann quer, vorzugsweise senkrecht, zu der Produktionsrichtung P orientiert sein. Die Fördervorrichtung 3 und die Drehvorrichtung 6 können in der Querrichtung Q nebeneinander angeordnet sein. Durch Verdrehen des Drehabschnitts 7 des Teigstücks 2 relativ zu dem ersten Abschnitt 5 des Teigstücks 2 kann ein verdrehtes Teigprodukt 8 erzeugt werden.

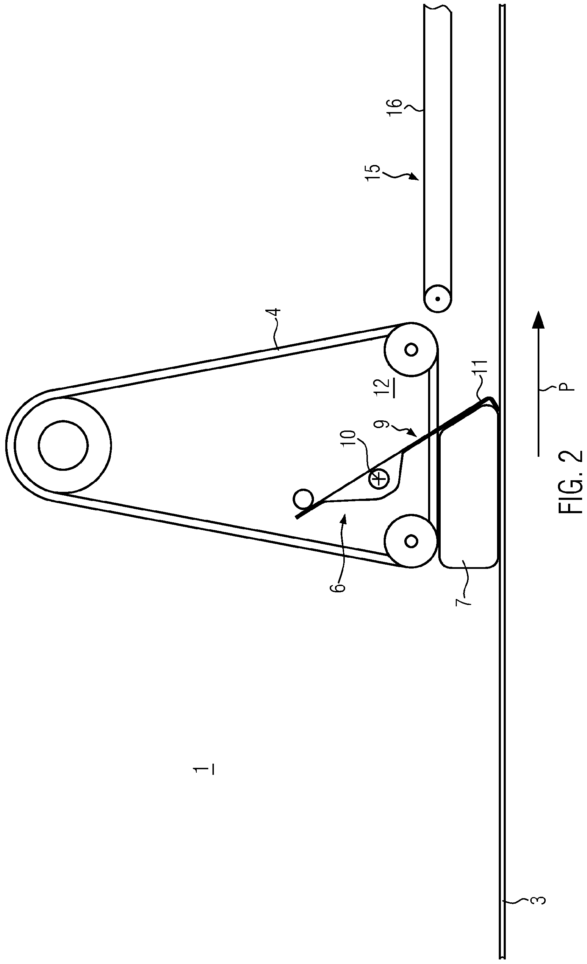

In Figur 2 ist die Vorrichtung 1 in einer schematischen Seitenansicht dargestellt. So ist zu erkennen, dass die Drehvorrichtung 6 wenigstens einen Haken 9 umfassen kann. Der Haken 9 kann schwenkbar, insbesondere um eine Schwenkachse 10, über der Fördervorrichtung 3 angeordnet sein. Die Schwenkachse 10 kann quer, vorzugsweise senkrecht, zu der Produktionsrichtung P orientiert sein. Der Haken 9 kann einen Eingreifabschnitt 11 aufweisen. Der Eingreifabschnitt 11 kann zum Eingreifen mit einem auf der Fördervorrichtung 3 geförderten Teigstück 2 konfiguriert sein. Insbesondere kann der Eingreifabschnitt 11 zum Eingreifen mit dem Drehabschnitt 7 des auf der Fördervorrichtung 3 geförderten Teigstücks 2 konfiguriert sein.

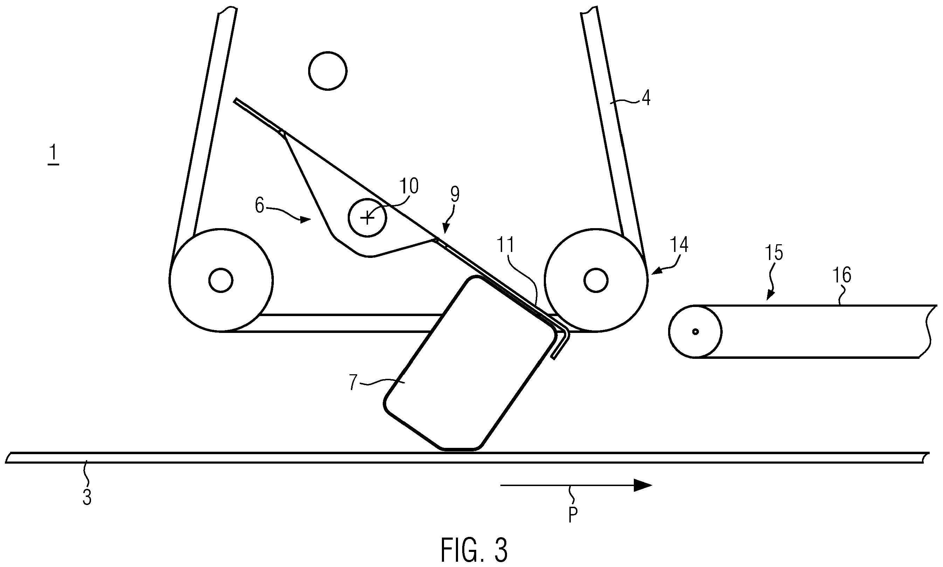

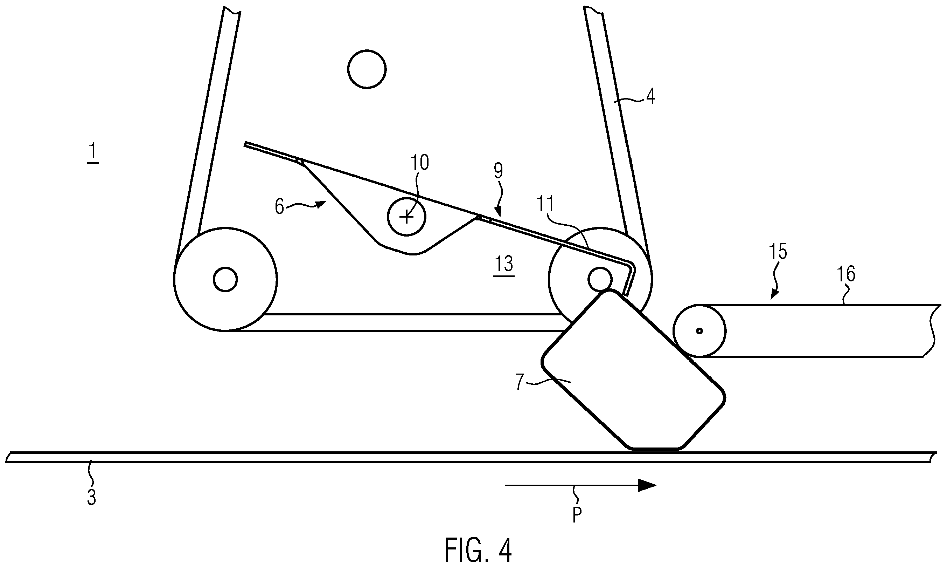

Zur besseren Übersichtlichkeit ist in Figur 2 (sowie in den folgenden Figuren 3 bis 5) von dem Teigstück 2 lediglich der Drehabschnitt 7 dargestellt. Durch den Eingriff des Eingreifabschnitts 11 mit dem Teigstück 2, insbesondere dem Drehabschnitt 7 des Teigstücks 2, und der Förderung des Teigstücks 2 durch die Fördervorrichtung 3 kann der Haken 9 von einer Ausgangsposition 12 (in Figur 2 dargestellt) hin zu einer ausgelenkten Position 13 (in Figur 4 dargestellt) schwenkbar sein.

In Figur 3 ist die Vorrichtung 1 ebenfalls in einer schematischen Seitenansicht, ähnlich der Ansicht aus Figur 2, dargestellt. Der Haken 9 ist jedoch in einer Schwenkposition zwischen der Ausgangsposition 12 und der ausgelenkten Position 13 dargestellt. Es ist erkennbar, dass durch die Bewegung der Fördervorrichtung 3, den Eingriff des Eingreifabschnitts 11 mit dem Drehabschnitt 7 sowie die Schwenkbewegung des Hakens 9 der Drehabschnitt 7 nach oben gedreht werden kann. Dadurch, dass gleichzeitig der (in Figur 3 nicht gezeigte) erste Abschnitt 5 des Teigstücks 2 durch das Halteband 4 gehalten werden kann, können der erste Abschnitt 5 und der Drehabschnitt 7 relativ zueinander verdreht werden. Das Halteband 4 kann einen stromabwärtsseitigen Endabschnitt 14 aufweisen. An dem stromabwärtsseitigen Endabschnitt 14 kann das Teigstück 2, insbesondere der erste Abschnitt 5 des Teigstücks 2, außer Eingriff mit dem Halteband 4 gebracht werden. Die Schwenkachse 10 kann stromaufwärts des stromabwärtsseitigen Endabschnitts 14 des Haltebands 4 angeordnet sein.

In Figur 4 ist die Vorrichtung 1 in einer schematischen Seitenansicht dargestellt, die den Ansichten aus den Figuren 2 und 3 ähnelt. In Figur 4 ist der Haken 9 in der ausgelenkten Position 13 dargestellt. Der Drehabschnitt 7 ist in einer gegenüber der in Figur 2 um annähernd 180° gedrehten Orientierung dargestellt. Durch diese Drehung sowie die Weiterförderung des Teigstücks 2 durch die Fördervorrichtung 3 kann der Eingriff zwischen dem Eingreifabschnitt 11 des Hakens 9 und dem Drehabschnitt 7 des Teigstücks 2 lösbar sein. Es ist zu erkennen, dass der Eingreifabschnitt 11 des Hakens 9 in der ausgelenkten Position 13 stromaufwärts des stromabwärtsseitigen Endabschnitts 14 des Haltebands 4 angeordnet sein kann.

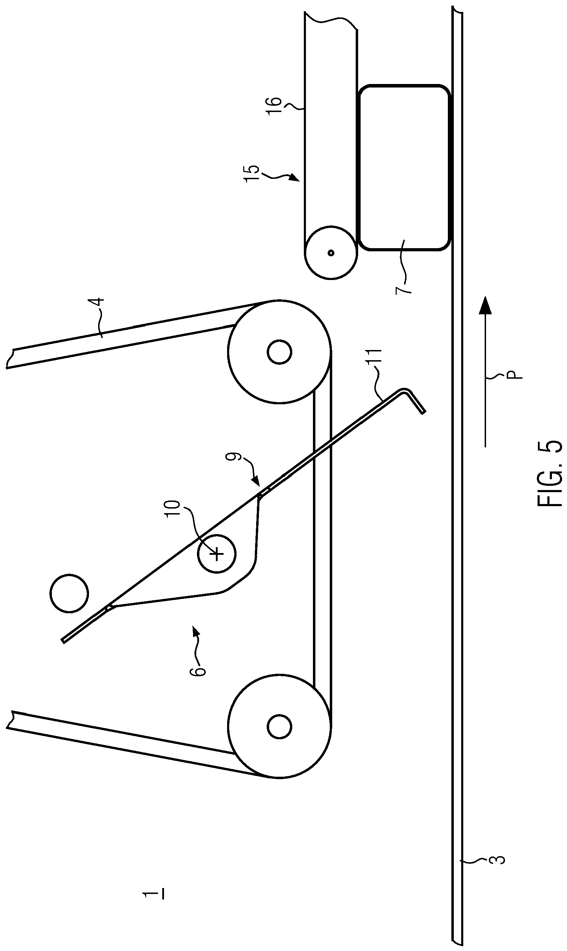

Die Vorrichtung 1 kann des Weiteren eine Andrückvorrichtung 15 umfassen. Die Andrückvorrichtung 15 kann dazu konfiguriert sein, das Teigstück 2 bzw. das verdrehte Teigprodukt 8 an die Fördervorrichtung 3 anzudrücken. Ein beginnender Eingriff zwischen dem Teigstück 2 und der Andrückvorrichtung 15 ist bereits in Figur 4 erkennbar. In Figur 5 ist zu sehen, dass der Drehabschnitt 7 des Teigstücks 2 um 180° gegenüber der in Figur 2 gezeigten Orientierung des Drehabschnitts 7 des Teigstücks 2gedreht wurde. Die Andrückvorrichtung 15 kann ein Förderband 16 umfassen. In Figur 1 ist die Andrückvorrichtung 15 der besseren Übersichtlichkeit halber nicht dargestellt.

In der bevorzugten Ausführung der Vorrichtung 1 können das Halteband 4 und die Fördervorrichtung 3 mit unterschiedlichen Fördergeschwindigkeiten angetrieben werden. Besonders bevorzugt ist dabei eine Ausführung, in der die Fördergeschwindigkeit der Fördervorrichtung 3 geringer ist als die Fördergeschwindigkeit des Haltebands 4. Dadurch kann dem ersten Abschnitt 5 des Teigstücks 2 ein Drehimpuls aufgeprägt werden, der der Drehrichtung des Drehabschnitts 7 des Teigstücks 2 entgegengesetzt ist. Dadurch kann das Verdrehen des Drehabschnitts 7 und des ersten Abschnitts 5 relativ zueinander unterstützt werden und/oder verhindert werden, dass der erste Abschnitt 5 beim Drehen des Drehabschnitts 7 mitgedreht wird.

## Patentansprüche

1. Vorrichtung (1) zum Verdrehen von Teigstücken (2), umfassend:
eine Fördervorrichtung (3), die zum Fördern von Teigstücken (2) in einer Produktionsrichtung (P) konfiguriert ist,
wenigstens ein Halteband (4), das oberhalb der Fördervorrichtung (3) angeordnet ist und zum Eingreifen mit einem ersten Abschnitt (5) eines der auf der Fördervorrichtung (3) angeordneten Teigstücke (2) konfiguriert ist, und
eine Drehvorrichtung (6), die dazu eingerichtet ist, einen Drehabschnitt (7) des Teigstücks (2) relativ zu dem ersten Abschnitt (5) und nach oben zu drehen, während das Halteband (4) mit dem ersten Abschnitt (5) des Teigstücks (2) eingreift, **dadurch gekennzeichnet, dass** die Drehvorrichtung (6) wenigstens einen Haken (9) umfasst, der schwenkbar über der Fördervorrichtung (3) angeordnet ist, wobei der Haken (9) einen Eingreifabschnitt (11) aufweist, der zum Eingreifen mit einem auf der Fördervorrichtung (3) geförderten Teigstück (2) konfiguriert ist.

2. Vorrichtung nach Anspruch 1, wobei die Fördervorrichtung (3) und die Drehvorrichtung (6) in einer Querrichtung (Q), die quer, vorzugsweise senkrecht, zu der Produktionsrichtung (P) orientiert ist, nebeneinander angeordnet sind.

3. Vorrichtung nach einem der vorangehenden Ansprüche, wobei der Haken (9) durch den Eingriff des Eingreifabschnitts (11) mit dem Teigstück (2) und dessen Förderung durch die Fördervorrichtung (3) von einer Ausgangsposition (12) hin zu einer ausgelenkten Position (13) schwenkbar ist, wobei vorzugsweise der Eingreifabschnitt (11) in der ausgelenkten Position (13) des Hakens (9) stromaufwärts eines stromabwärtsseitigen Endabschnitts (14) des Haltebands (4) angeordnet ist.

4. Vorrichtung nach einem der vorangehenden Ansprüche, wobei eine Schwenkachse (10), um welche der Haken (9) schwenkbar ist, quer, vorzugsweise senkrecht, zu der Produktionsrichtung (P) orientiert ist.

5. Vorrichtung nach Anspruch 4, wobei die Schwenkachse (10) stromaufwärts eines stromabwärtsseitigen Endabschnitts (14) des Haltebands (4) angeordnet ist.

6. Vorrichtung nach einem der vorangehenden Ansprüche, wobei eine Fördergeschwindigkeit der Fördervorrichtung (3) und eine Fördergeschwindigkeit des Haltebandes (4) unterschiedlich sind.

7. Vorrichtung nach einem der vorangehenden Ansprüche, wobei eine Fördergeschwindigkeit der Fördervorrichtung (3) geringer ist als eine Fördergeschwindigkeit des Haltebandes (4).

8. Verfahren zum Verdrehen von Teigstücken (2) durch eine Vorrichtung nach einem der vorangehenden Ansprüche, das Verfahren umfassend:
Fördern von Teigstücken (2) in einer Produktionsrichtung (P) durch die Fördervorrichtung (3),
Eingreifen mit einem ersten Abschnitt (5) eines der auf der Fördervorrichtung (3) angeordneten Teigstücke (2) durch das Halteband (4), das oberhalb der Fördervorrichtung (3) angeordnet ist
Drehen eines Drehabschnitts (6) des Teigstücks (2) relativ zu dem ersten Abschnitt (5) und nach oben, während das Halteband (4) mit dem ersten Abschnitt (5) des Teigstücks (2) eingreift, durch die Drehvorrichtung (6).

9. Verfahren nach Anspruch 8, wobei der erste Abschnitt (5) und der Drehabschnitt (7) relativ zueinander um 180° verdreht werden.

10. Verfahren nach Anspruch 8 oder 9, wobei der erste Abschnitt (5) und der Drehabschnitt (7) in einer Querrichtung (Q), die quer, vorzugsweise senkrecht, zu der Produktionsrichtung (P) orientiert ist, nebeneinander angeordnet sind.

11. Verfahren nach einem der Ansprüche 8-10, wobei die Fördervorrichtung (3) und das Halteband (4) mit unterschiedlichen Fördergeschwindigkeiten angetrieben werden.

12. Verfahren nach einem der Ansprüche 8-11, wobei die Fördervorrichtung (3) mit einer Fördergeschwindigkeit angetrieben wird, die geringer ist als eine Fördergeschwindigkeit des Haltebands (4).

## Claims

1. Device (1) for twisting pieces of dough (2), comprising:
a conveyor (3) configured to convey pieces of dough (2) in a production direction (P),
at least one holding belt (4) arranged above the conveyor (3) and configured to engage with a first portion (5) of a piece of dough (2) arranged on the conveyor (3), and
a turning device (6) configured to turn a turning portion (7) of the piece of dough (2) relative to the first portion (5) and upwardly while the holding belt (4) engages with the first portion (5) of the piece of dough (2), **characterized in that** the turning device (6) comprises at least one hook (9) pivotally arranged above the conveyor (3), wherein the hook (9) comprises an engagement portion (11) configured to engage a piece of dough (2) conveyed on the conveyor (3).

2. Device according to claim 1, wherein the conveyor (3) and the turning device (6) are arranged side by side in a transverse direction (Q) oriented transversely, preferably perpendicularly, to the production direction (P).

3. Device according to one of the preceding claims, wherein the hook (9) is pivotable from a starting position (12) towards a deflected position (13) by the engagement of the engagement portion (11) with the piece of dough (2) and its conveyance by the conveyor (3), wherein, preferably, the engagement portion (11) ist arranged upstream of a downstream end portion (14) of the holding belt (4) in the deflected position (13) of the hook (9).

4. Device according to one of the preceding claims, wherein a pivot axis (10) about which the hook (9) is pivotable is oriented transversely, preferably perpendicularly, to the production direction (P).

5. Device according to claim 4, wherein the pivot axis (10) is arranged upstream of a downstream end portion (14) of the holding belt (4).

6. Device according to one of the preceding claims, wherein a conveying speed of the conveyor (3) and a conveying speed of the holding belt (4) are different.

7. Device according to one of the preceding claims, wherein a conveying speed of the conveyor (3) is lower than a conveying speed of the holding belt (4).

8. Method for twisting pieces of dough (2) by a device according to one of the preceding claims, the method comprising:
conveying pieces of dough (2) in a production direction (P) by the conveyor (3),
engaging a first portion (5) of one of the pieces of dough (2) arranged on the conveyor (3) by the holding belt (4) arranged above the conveyor (3)
turning a turning portion (6) of the piece of dough (2) relative to the first portion (5) and upwardly while the holding belt (4) engages with the first portion (5) of the piece of dough (2) by the turning device (6).

9. Method according to claim 8, wherein the first portion (5) and the turning portion (7) are twisted 180° relative to each other.

10. Method according to claim 8 or 9, wherein the first portion (5) and the turning portion (7) are arranged side by side in a transverse direction (Q) oriented transversely, preferably perpendicularly, to the production direction (P).

11. Method according to one of claims 8-10, wherein the conveyor (3) and the holding belt (4) are driven at different conveyor speeds.

12. Method according to one of claims 8-11, wherein the conveyor (3) is driven at a conveying speed that is lower than a conveying speed of the holding belt (4).

## Revendications

1. Dispositif (1) pour torsader des morceaux de pâte (2), comprenant :
un dispositif convoyeur (3) configuré pour convoyer des morceaux de pâte (2) dans une direction de production (P),
au moins une bande de retenue (4) qui est agencée au-dessus du dispositif convoyeur (3) et est configurée pour s'engager avec une première section (5) d'un des morceaux de pâte (2) agencés sur le dispositif convoyeur (3), et
un dispositif de rotation (6) qui est conçu pour faire tourner une section de rotation (7) du morceau de pâte (2) par rapport à la première section (5) et vers le haut, tandis que la bande de retenue (4) s'engage avec la première section (5) du morceau de pâte (2), **caractérisé en ce que** le dispositif de rotation (6) comprend au moins un crochet (9) qui est agencé de manière pivotante au-dessus du dispositif convoyeur (3), dans lequel le crochet (9) comporte une section d'engagement (11) qui est configurée pour s'engager avec un morceau de pâte (2) convoyé sur le dispositif convoyeur (3).

2. Dispositif selon la revendication 1, dans lequel le dispositif convoyeur (3) et le dispositif de rotation (6) sont agencés l'un à côté de l'autre dans une direction transversale (Q) qui est orientée transversalement, de préférence perpendiculairement, à la direction de production (P).

3. Dispositif selon l'une des revendications précédentes, dans lequel le crochet (9) peut pivoter par l'engagement de la section d'engagement (11) avec le morceau de pâte (2) et son convoyage par le dispositif convoyeur (3) à partir d'une position de départ (12) vers une position défléchie (13), dans lequel la section d'engagement (11) est de préférence agencée dans la position défléchie (13) du crochet (9) en amont d'une section d'extrémité aval (14) de la bande de retenue (4) .

4. Dispositif selon l'une des revendications précédentes, dans lequel un axe de pivotement (10) autour duquel le crochet (9) peut pivoter est orienté transversalement, de préférence perpendiculairement, par rapport à la direction de production (P).

5. Dispositif selon la revendication 4, dans lequel l'axe de pivotement (10) est agencé en amont d'une section d'extrémité aval (14) de la bande de retenue (4) .

6. Dispositif selon l'une des revendications précédentes, dans lequel la vitesse de convoyage du dispositif convoyeur (3) et une vitesse de convoyage de la bande de retenue (4) sont différentes.

7. Dispositif selon l'une des revendications précédentes, dans lequel une vitesse de convoyage du dispositif convoyeur (3) est inférieure à une vitesse de convoyage de la bande de retenue (4).

8. Procédé pour torsader des morceaux de pâte (2) à l'aide d'un dispositif selon l'une des revendications précédentes, le procédé comprenant :
le convoyage de morceaux de pâte (2) dans une direction de production (P) par le dispositif convoyeur (3),
l'engagement de la bande de retenue (4), qui est agencée au-dessus du dispositif convoyeur (3), avec une première section (5) de l'un des morceaux de pâte (2) agencés sur le dispositif convoyeur (3),
la rotation par le dispositif de rotation (6) d'une section de rotation (6) du morceau de pâte (2) par rapport à la première section (5) et vers le haut, tandis que la bande de retenue (4) s'engage avec la première section (5) du morceau de pâte (2).

9. Procédé selon la revendication 8, dans lequel la première section (5) et la section de rotation (7) sont torsadées l'une par rapport à l'autre de 180°.

10. Procédé selon la revendication 8 ou 9, dans lequel la première section (5) et la section de rotation (7) sont agencées l'une à côté de l'autre dans une direction transversale (Q) qui est orientée transversalement, de préférence perpendiculairement, à la direction de production (P).

11. Procédé selon l'une des revendications 8 à 10, dans lequel le dispositif convoyeur (3) et la bande de retenue (4) sont entraînés à des vitesses de convoyage différentes.

12. Procédé selon l'une des revendications 8 à 11, dans lequel le dispositif convoyeur (3) est entraîné à une vitesse de convoyage qui est inférieure à la vitesse de convoyage de la bande de retenue (4).
